# EUROPEAN PATENT APPLICATION

(11) **EP 0 984 403 A1**
(43) Date of publication of application: **08.03.2000**
(21) Application number: 98202915.9
(22) Date of filing: 01.09.1998
(51) Int. Cl.: G07F 7/10, G07C 9/00

(54) **Security system**

(71) Applicant: Mindport B.V., 2130 KA Hoofddorp (NL)
(72) Inventor: Wajs, Andrew Augustine, 2023 AA Haarlem (NL)
(74) Representative: de Vries, Johannes Hendrik Fokke

(57) **Abstract**

A security system for preventing unauthorized use, entrance or the like, comprises a number of secure devices, each of the secure devices comprising a chip with logic circuitry having a function in providing authorization to the security system. In at least a part of the secure devices the chip of a secure device is provided with a unique chip layout.

## Description

The present invention relates to a security system for preventing unauthorized use, entrance or the like, comprising a number of secure devices, each of said secure devices comprising a chip with logic circuitry having a function in providing authorization to the security system.

Security systems of the above-mentioned type are used in many applications, such as for example to prevent unauthorized access to secured rooms, in pay tv applications, in banking systems etc. The security devices used are generally made as so-called smart cards comprising a chip. It will be clear that in view of the many smart cards provided to many different persons, security sytems of this type are open to attack by pirates or defrauders. Attacking a smart card currently involves a process, wherein during an analysis phase the chip of the smart card is probed to find a means of attack. In this process of attacking the layout of the chip is analysed to identify the appropriate probe points to access the data contained in the chip. Thereafter the attack is planned in a preparation phase and finally the contents of the chip are extracted in the actual attack phase. While the first and second steps typically take months, the third step can be performed in under a day. This means that once a smart card has been cracked for the first time, any second attack is relatively easy. It will be clear that this is a serious problem in security systems. For, once a smart card has been identified as being broken and has been disabled by the controlling system, the pirate can crack another card in a repeated attack within a relatively short period and thereby continue with piracy or fraud.

Moreover, the smart cards used in prior art security systems are generally provided with a chip with the same basic silicon layout, even when used in different applications. If for example a smart card of a specific type is hacked for its banking information, the knowledge obtained by hacking this banking card can also be used to extract the secure information from the same type of card when it is used in a different application, for example in a pay television system.

The invention aims to provide a security system of the above-mentioned type wherein the vulnerability for an attack by a pirate is significantly decreased and wherein the time required for a repeated attack of the secure device is substantially increased.

To this end the invention provides a security system of the above-mentioned type, characterized in that in at least a part of said secure devices, the chip of a secure device is provided with a unique chip layout.

In this manner a security system is obtained wherein at least a part but preferably all secure devices are provided with a chip with a random layout of the logic circuitry of the secure device. This means that the hardware implemention of the secure functionality of the secure device varies from device to device.

According to a preferred embodiment at least said logic circuitry of the chips of said part of the secure devices is implemented in FPGA technology, wherein the layout is programmed in the FPGA circuitry either in a volatile or non-volatile manner.

The invention further provides a set of secure devices to be used in a security system of the invention, wherein each of said secure devices comprises a chip with logic circuitry having a function in providing authorization to the holder of a secure device, wherein in at least a part of said secure devices, the chip of each secure device is provided with a unique chip layout.

Finally, the invention provides a method for manufacturing a secure device for the the security system of the invention, wherein secure devices with a chip are used, said chips having logic circuitry having a function in providing authorization to the security system, wherein in at least a part of said secure devices the chip of a secure device is provided with a unique chip layout.

The invention will be further explained by reference to the drawings, in which an embodiment of the system and method of the invention are schematically shown.
Fig. 1 schematically shows a pay tv system comprising an embodiment of a security system of the invention.
Fig. 2 schematically shows the internal structure of a smart card used as secure device in the system of fig. 1.
Fig. 3 shows a diagram of an embodiment of the method of the invention.

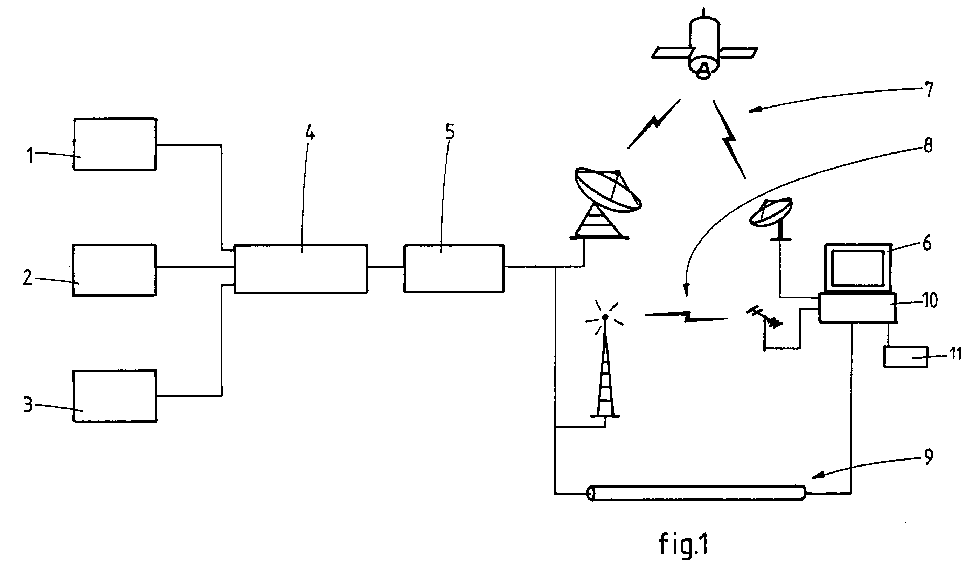

Fig. 1 shows merely by way of example a broadcasting system wherein three broadcasters 1-3 are coupled with a multiplexer unit 4. The multiplexer unit 4 comprises means for scrambling, encoding and compressing broadcast signals provided by the broadcasters 1-3 and the thus obtained digital data streams are multiplexed into a digital transport stream. In the embodiment shown this digital transport stream is modulated by way of modulator 5 before transmission. The operator of the equipment including the multiplexer unit 4 and modulator 5 is responsible for transmitting the signal to the receiving equipment of the public, one television set 6 being shown by way of example in fig. 1. One or more of the broadcasters 1-3 may be private broadcasters operating according to the concept of pay tv which implies subscription. This means that people wishing to view programs broadcasted by a particular broadcaster, have to subscribe to such a broadcast and pay the appropriate fee.

As schematically indicated the transmission of the signal may be carried out through one or more telecommunication channels including a satellite link 7, terrestrial link 8 or a cable system 9.

Access to anyone of the broadcast signals provided by the broadcasters 1-3 requires a decoder 10 generally including a conditional access module not shown cooperating with a smart card 11 in a manner known per se. The smart card 11 is one of the secure devices of a security system implemented in the broadcasting system shown in fig. 1 to prevent unauthorized access to pay tv signals by persons which did not subscribe to the broadcast. Each subscriber is provided with a smart card 11, each smart card 11 having a unique key and/or address. This security system may operate for example in a manner known per se using ECM's and EMM's to provide access to the pay tv signals to authorized persons having a smart card 11 with means for providing authorization to the security system.

As explained above, such a security system is open to attack by pirates trying to copy an original smart card to thereby provide a large number of pirate smart cards. In order to substantially increase the time required for a repeated attack on a smart card, the security system described is provided with secure devices or smart cards 11, each of the smart cards comprising a chip with logic circuitry having a function in providing authorization to the system in a conventional manner. The logic circuitry may include the circuitry to store a unique key, and/or the algorithms and logic required to provide authorization, for example the algorithm to decrypt the key hierarchy used in a security system such as eurocrypt.

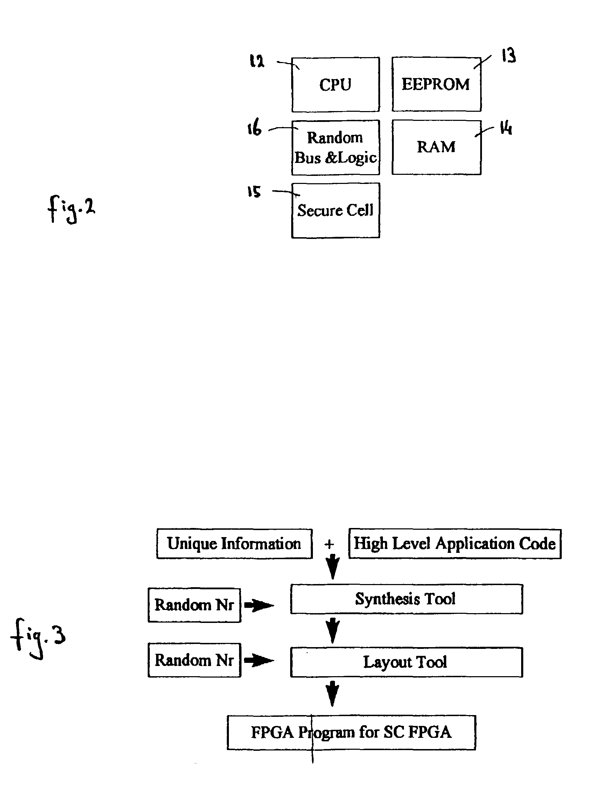

Fig. 2 shows in a very schematic manner the internal structure of a smart card 11 showing that the chip of the smart card 11 includes a central processing unit 12, an EEPROM circuit 13, a RAM circuit 14 a secure cell 15 and random bus and logic circuitry 16. In the embodiment described the unique circuit layout is provided only in the secure cell 15, in which for example a cryptographic engine and a volatile storage element for storing a secret key are located. For a further explanation of this structure of a smart card reference is made to European Patent Application 97202854.2 of the same applicant.

According to a preferred embodiment the secure cell is implemented in FPGA technology (field programmable gate array). The FPGA circuit of the secure cell 15 is programmed in a usual manner in accordance with the diagram of fig. 3 to personalize the smart card. In order to personalize a smart card 11, unique information is stored in the secure cell, this unique information comprising a unique key, a key decryption algorithm used in the security system or the like. Usually an FPGA is programmed as follows. First the unique information for personalization is written in a high level language, for example C or VHDL. The high level language is first compiled. Thereafter the information is put through a synthesis tool which generates a logic implementation of the high level language code. This logic implementation would generally include logic circuitry such as AND gates, OR gates, D latches etc., which are combined to produce the correct cryptographic functionality. Thereafter the logic implementation is put through a routing program which constructs the actual program file for a particular FPGA. This file will specify which cells are interconnected within the FPGA and how each cell is programmed. The actual program file is then loaded into the FPGA circuit on power up or fuse blown into the FPGA depending on the particular FPGA technology used.

Generally a synthesis tool can produce many variations of the same functionality. In prior art applications the synthesis tool is designed to produce logic which utilizes the minimum number of gates, shows an optimal power efficiency, has the best speed performance or a compromise of the above.

According to the present invention a variation factor, for example a random number, is introduced into the synthesis tool such that the layout provided by the synthesis tool will vary from chip to chip. As schematically shown in the diagram of fig. 3, a variation factor, such as a random number is fed into the synthesis tool and this results in the tool generating a set of logic which is unique to that variation factor. A new variation factor is used for personalizing each of the smart cards 11 of the security system. In this manner it is obtained that each smart card 11 of the security system has a unique layout of the logic circuitry of the secure cell 15.

Similarly a variation factor can be fed into the layout tool resulting in a further randomizing of the layout of the logic circuitry.

Further it is possible to introduce a variation factor in the compilation step, so that the input to the synthesis tool will receive a varying input. All possible variations can be used either separately or in combination.

Using the method of the invention the personalization step introducing a unique key, the logic implementation of the key and/or the decryption functions into the smart card 11, will result in a layout of the logic circuitry which is unique to each smart card 11. In this manner it is obtained that the time needed for each attack of a security system is substantially increased as the pirate can not use the information obtained in an analysis phase and a preparation phase in an attack of a first smart card, in attacking another smart card.

As an alternative, instead of using FPGA technology in the secure cell only, more parts of the chip or the entire chip of the smart card can be built using FPGA techniques and can then be randomized in the above described manner.

In a preferred embodiment a volatile FPGA is used, wherein the FPGA program is stored in RAM 14 of the smart card 11, which is powered by a battery just as the volatile storage of the key in the secure cell 15. Including defense traps as known per se in the smart card chip will result in a loss of the contents of the RAM memory and the volatile storage of the secure cell 15 if a pirate fails to overcome thew defense strategy of the chip. Thereby the programming of the FPGA circuitry will be lossed. In this manner it is obtained that by attacking a card no information is gathered on how to attack a next card.

Although the invention is explained in the above by reference to a pay tv system, the security system of the invention can be used in any security system using secure devices for providing authority to the holder of the secure device, such as security systems used to protect rooms, buildings, or the like against unauthorized entrance, banking cards etc. Further, although it is preferred to provide each smart card with a unique layout it is also possible to provide groups of cards with a unique layout.

The invention is therefore not restricted to the above described embodiment which can be varied in a number of ways within the scope of the claims.

## Claims

1. Security system for preventing unauthorized use, entrance or the like, comprising a number of secure devices, each of said secure devices comprising a chip with logic circuitry having a function in providing authorization to the security system, characterized in that in at least a part of said secure devices, the chip of a secure device is provided with a unique chip layout.

2. Security system according to claim 1, wherein at least said logic circuitry of the chips of said part of the secure devices is implemented in FPGA technology, wherein the layout is programmed in the FPGA circuitry either in a volatile or non-volatile manner.

3. Security system according to claim 2, wherein the logic circuitry of each secure device chip is provided in a secure cell of the chip.

4. Security system according to claim 1, wherein the complete secure device chip is implemented in FPGA technology, wherein the layout is programmed in the chip either in a volatile or non-volatile manner.

5. Security system according to claim 2, 3 or 4, wherein the logic circuitry or the entire chip is made as a volatile programmable FPGA, wherein the FPGA program is stored in a battery powered RAM.

6. A set of secure devices to be used in a security system according to anyone of claims 1-5, wherein each of said secure devices comprises a chip with logic circuitry having a function in providing authorization to the holder of a secure device, wherein in at least a part of said secure devices, the chip of each secure device is provided with a unique chip layout.

7. A set according to claim 6, wherein at least said logic circuitry of the chips of said part of the secure devices is implemented in FPGA technology, wherein the layout is programmed in the FPGA circuitry either in a volatile or non-volatile manner.

8. Method for manufacturing a secure device for a security system according to anyone of claims 1-5 or for a set of secure devices according to claim 6 or 7, wherein secure devices with a chip are used, said chips having logic circuitry having a function in providing authorization to the security system, wherein in at least a part of said secure devices, the chip of a secure device is provided with a unique chip layout.

9. Method according to claim 8, wherein chips with logic circuitry in FPGA technology are use, said method comprising the steps of programming a unique information in the logic circuitry by means of synthesis tool and a layout tool, wherein for each secure device of said part of secure devices, a variation factor is introduced in at least one of the synthesis tool and the layout tool, thereby providing a unique circuit layout.

10. Method according to claim 9, wherein the synthesis tool is provided with input information compiled from a high level language code, wherein a variation factor is introduced in at least one of the compilation step of the high level language code, the synthesis tool and the layout tool.
